# EUROPEAN PATENT SPECIFICATION

(11) **EP 1 683 351 B1**
(45) Date of publication and mention of the grant of the patent: **03.04.2019**
(21) Application number: 04800924.5
(22) Date of filing: 09.11.2004
(51) Int. Cl.: H04N 5/77, H04N 5/225, H04N 5/765, H04N 5/907, H04N 9/804

(54) **RECYCLABLE, DIGITAL ONE-TIME-USE VIDEO CAMERA**
WIEDERVERWERTBARE DIGITALE EINWEG-VIDEOKAMERA
CAMERA VIDEO NUMERIQUE RECYCLABLE A USAGE UNIQUE

(30) Priority: 10.11.2003 US 705193
(43) Date of publication of application: 26.07.2006
(73) Proprietor: Cisco Technology, Inc., San Jose, CA 95134 (US)
(72) Inventor: BRAUNSTEIN, Ariel, San Francisco, CA 94110 (US); FURLAN, John, Louis, Warpakowski, Belmont, CA 94002 (US); KAPLAN, Jonathan, San Francisco, CA 94133 (US)
(74) Representative: Mathys & Squire LLP
(86) International application number: PCT/US2004/037375
(87) International publication number: WO 2005/048596

(56) References cited:
- WO-A1-01/15440
- WO-A1-03/047245
- WO-A2-03/024083
- JP-A- 11 234 560
- JP-A- 2002 218 305
- US-A1- 2001 022 617
- US-B1- 6 686 970
- US-B1- 6 950 129

## Description

### FIELD OF THE INVENTION

An aspect of the invention generally relates to a digital video camera and devices associated with a one-time-use digital video camera.

### BACKGROUND OF THE INVENTION

The design of the multi-use digital video cameras allows the consumer to film as many videos as desired. The video camera may be limited in video storage capacity or battery capacity but the consumer has the ability to extend the capacity by buying consumable blank tapes or recharging the battery. Multi-use digital cameras are designed to provide the consumer with digital photography experience that is under the control of the consumer. They allow the consumers to preview the filmed video segment, add information on the video content (i. e. date etc.), adjust controls to set resolution and image quality, and other digital capabilities that define the digital video experience. The multi-use digital video camera may possess a large amount and variety of internal processing power. In a multi-use digital video camera, the central processing unit, Application Specific Integrated Circuit (ASIC), and/or micro controllers should be able to provide the consumer with the above features as part of the digital video experience. Some multi-use digital video cameras contain the components to process and enhance the video data within the camera itself. The communication port in a multi-use digital video camera (serial, parallel, USB or any other type of communication) is designed for maximum compatibility with other consumer devices or computers. The easier it is to connect to another device the better it is. WO 03/047245 discloses a recyclable digital camera including a casing, a lens housed within the casing, an encoding device arranged to encode information from the lens into a format suitable for storing in a storage device, a storage device arranged to store information from the encoder, and a controller arranged to encrypt information from the encoding device before the information is stored in the storage device, then a controller further arranged to delete information from the storage device and record over the storage device with random information upon request. US 2001/0022617 discloses a system for recycling an electronic-image recording apparatus such as an electronic camera, etc., which can be used again. The system includes a restricting device to restrict an image-capturing operation under a predetermined condition occurring after use of the electronic-image recording apparatus, a readout section to read a first image signal in the basis of an image signal stored in the electronic-image recording apparatus, a converting section to convert the first image signal, read by the readout section, into a second image signal, and a canceling section to cancel the image-capturing restriction set by the restricting device included in the electronic-image recording apparatus.

### SUMMARY OF THE INVENTION

Various apparatuses are described in which a digital video camera has a non-volatile digital storage medium that stores captured video content in a digital form as defined in claim 1 which relates to a one-time-use digital camera. A server external to the digital video camera has a
communication port to receive the captured video content. The server has a processor configured to process the video content and to supply the video content to a consumer in a video format useable by other consumer devices.

### BRIEF DESCRIPTION OF THE DRAWINGS

The drawings refer to the invention in which:
Figure 1 illustrates an embodiment of a block diagram of a digital one-time use video camera.
Figure 2 illustrates a block diagram of an embodiment of a digital one-time use video camera communicating over a secure connection to an external processing unit.
Figure 3 illustrates a block diagram of an embodiment of an external processing unit to process and enhance the video content captured by the digital one time use video camera.
Figure 4 illustrates a flow diagram of an embodiment of a use cycle of a digital one-time use video camera.
Figure 5 illustrates a flow diagram of an embodiment of a life cycle of a digital one-time use video camera.

### DETAILED DISCUSSION

In the following description, numerous specific details are set forth, such as examples of specific data signals, named components, connections, types of limiting-use components, etc., in order to provide a thorough understanding of the present invention. It will be apparent, however, to one skilled in the art that the present invention may be practiced without these specific details. In other instances, well known components or methods have not been described in detail but rather in a block diagram in order to avoid unnecessarily obscuring the present invention. Thus, the specific details set forth are merely exemplary.

In general, various methods and apparatuses are described in which a digital video camera has a non-volatile digital storage medium that stores captured video content in a digital form. One or more servers external to the digital video camera have a communication port to receive the captured video content. At least one of the servers has a processor configured to process the video content and to supply the video content to a consumer in a video format useable by other consumer devices. The digital video camera may be designed to function with the infrastructure of servers and back-end processing rather than consumer electronics internal to the video camera doing the video processing. The digital video camera captures image and sound data and formats that data. The digital video camera captures image and sound data with minimal processing to improve its quality. The digital video camera stores the video content internally in a digital state for further processing and use by the servers. The digital video camera may be a digital one-time use video camera (Digital OTUVC) having a limiting use component within the digital OTUVC that restricts the use of the digital OTUVC for a single use cycle. Once the digital OTUVC reaches an "end of cycle condition" caused by the limiting use component, then a proper indication is provided to a user and the digital OTUVC disables itself from further use in that current cycle. A consumer returns the digital OTUVC to a retail location for processing. At the retail location, the one or more external processing units read the stored captured video data, process the video data to improved its quality, and generate a consumable output such as prints, web uploads, a compact disc with the video content, a DVD with the video content, etc. The digital OTUVC may then be refurbished and distributed for another use cycle.

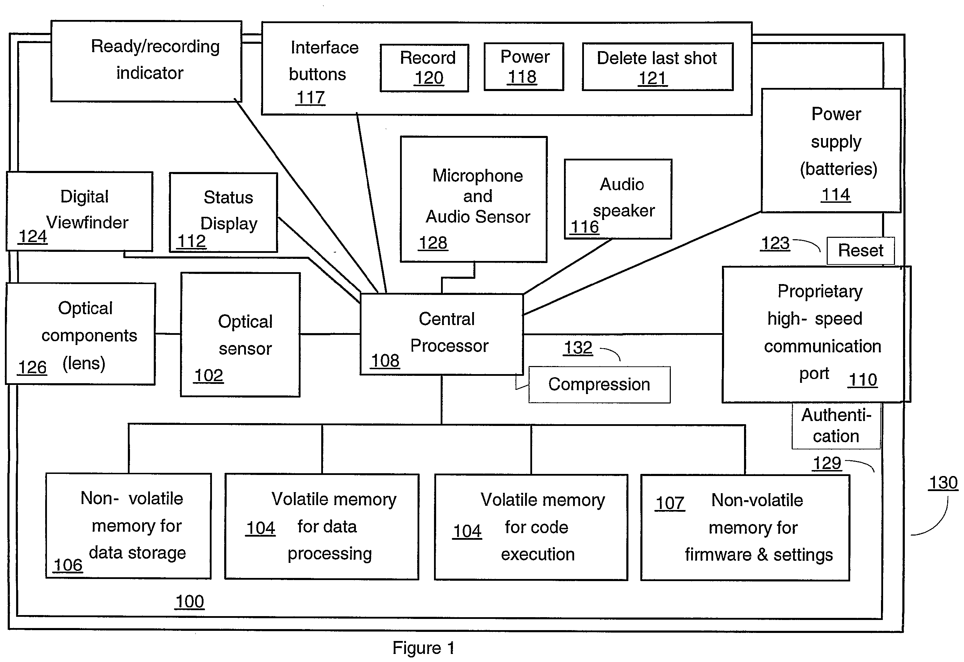

Figure 1 illustrates an embodiment of a block diagram of a digital one-time use video camera. The digital OTUVC 100 may have a photo optic sensor 102, such as 1280 x 1024 Pixel Complementary Metal Oxide Semiconductor or a Charge Coupled Device sensor, a volatile memory 104 for code execution and temporary video content capture, such as thirty two megabytes of Synchronous Dynamic Random Access Memory, a non volatile digital storage medium 106 to store the captured video data in a digital form and format as well as storing associated meta data. A non volatile memory 107 for storage of firmware and settings, a central processing unit 108, such as a micro-controller, an ASIC, etc., one or more communication ports 110, such as a proprietary Universal Serial Bus-based interface, a digital view finder/playback display 124, a status display 112, such as a LCD, a power supply 114, such as non rechargeable batteries, an audio indicator 116, such as a speaker, an optical lens 126, a microphone 128, and a user interface 117.

The photo optic sensor 102 may convert an optical image filmed by the camera into a data array. The optical lens 126 projects the actual images onto the photo optic sensor 102 to convert the analog images into an array of digital information. The photo optic sensor 102 quantifies the variable shades of light focused on the photo optic sensor 102 by the optical lens 126 into data arrays representing a discrete number of colors. The photo optic sensor 102 may also contain an ASIC to provide several optional features such as automatic exposure adjustment, automatic white balance, and automatic gamma compensation. The automatic exposure adjustment changes the photo optic sensor's 102 light sensitivity depending upon the lighting conditions. The automatic white balance balances the hue of the color spectrum in the data array.

The image capturing components, the optical sensor 102 and the optical lens may be capable of capturing a large and rapid sequences of photos such as 30 framers per second or more over any period of time. The optical sensor 102 may either be a CMOS sensor, CCD sensor, or other similar sensor to support this frame rate. The microphone 128 captures the sound corresponding to the captured images. The microphone 128 and optical sensor 102 combine to supply the captured video content to the central processor 108. The digital OTUVC 100 may capture a very rapid succession of still images and store the soundtrack in synch with the images.

When the video content is captured in a digital form, the video content is easily compressible to store or transfer the video content, modifiable to enhance the quality of the final video product, and transferable within the camera and to components external to the camera.

The memory components are used to both store the video stream of data as well as to develop the video stream of data. The memory components also execute the necessary code in order to operate the OTUVC 100. There may be multiple types of memory components in the OTUVC 100, each memory customized for a different purpose and cost. The two main types of memory may include volatile memory such as SDRAM, DRAM, etc. and non-volatile memory flash memory, write-once memory, etc. Non-volatile memories 106, 107 and volatile memory 104 are examples of such memories.

The processing unit 108 may execute the firmware instructions stored in the non-volatile memory 107 and copy the instructions to the volatile memory 104 for execution. The processing unit 108 controls the operation of the digital OTUVC 100. The processor unit 108 also has logic to process the stream of data that is generated by the image and audio capturing components and transform the captured video content into a pre-defined file structure. The processing unit 108 may have logic configured to store the video content in a non-consumable video format only visible and retrievable in an intelligible form from the external processing unit and the digital camera itself. Thus, the processing unit 108 may use portions of the volatile memory 104 to covert the raw data into captured video content in either a proprietary or a standard video file format, such as Motion Pictures Graphic (MPG) MPG1, MPG2, MPG4, MJPG. The compression logic 132 may compress the video data prior to storing the captured video data in the non-volatile memory 106.

The compression logic 132 may use video and audio compression techniques such as video compression standards such as a variant of Moving Pictures Experts Group (MPEG), a Motion Joint Photographic Experts Group (MJPEG), Pulse Code Modulation (PCM) or similar compression standard. The compression logic may use video and audio compression techniques such as a proprietary video and audio compression algorithm decompressable merely by the external server, compression of composed video images, compression of three video channels (R, G, B), compression of raw sensor data in separate video channels (R, G1, B, G2), down sampling frame-rate of video stream, or similar compression technique.

The communication port 110 may facilitate communications between the components internal to the digital OTUVC 100 and devices external to the digital OTUVC 100. Communication components at the communication port 100 may include the controllers, connectors and a circuit to allow data from the internal OTUVC 100 memory to be transferred to the one or more external servers. Data may be transferred via a communication protocol such as FireWire, USB 1 or 2, MicroWire, etc. and may include data compression and encryption/decryption processes.

Also, the communication port 110 may receive reset signal to allow the digital OTUVC 100 to be used for another use cycle. A propriety mechanism,, such as a key, may communicate a physical or electronic signal through the communication port 110 to reset the digital OTUVC 100 for another use cycle. The reset may erase the existing captured video content on the non-volatile digital storage medium 106 and prepare the non-volatile digital storage medium 106 to receive new video content. The refurbishing process may also upgrade the firmware and change camera parameters such as life cycle criteria, user interface functionality, etc.

The digital viewfinder 124 allows a user to see the images of the video to be taken and to target that area. The display of the digital viewfinder 124 also allows the user to review video data that has been recorded on the internal non-volatile digital storage medium 106. Thus, the viewing components may be used for both targeting the photography subject as well as reviewing the captured data. The digital viewfinder 124 may be an active electronic component such as a screen active or reflective Liquid Crystal Display (LCD). The playback display portion of the optical viewfinder 124 may be a higher quality multi-shade display capable of showing duel-tone or full color pictures and/or video segments. The camera may also have an optical viewfinder (not shown) having a set of lenses and optical elements.

The status display 112 visually communicates information, such as displaying current camera status, remaining recording time, batter level, low lighting conditions, and other similar information. The status display 112 LCD may be an ultra low-energy consumption black and white segment-based display that shows pre-defined symbols and patterns.

The digital OTUVC 100 may have an internal casing 129 and an external plastic casing 130. The casings 129 and 130 protect the digital OTUVC 100 in every use cycle and allow for a quick and easy refurbishing process. The internal casing 129 may contain the electronic components associated with the digital OTUVC 100. The external casing 130 may be hard shell designed to protect the digital OTUVC 100 and to prevent a repeated use of the digital OTUVC 100 by the user. For example, the external casing 130 may be keyed in conjunction with the focus lens 126 such that the internal casing 129 can only be removed in the factory or else render the entire digital OTUVC 100 useless. This would prevent the user from replacing an expired power supply 114, extending the capacity of the memory, volatile memory 104 or non-volatile memory 106, storing the image data, and or other mechanisms in the digital OTUVC 100 design so that the digital OTUVC 100 is only used by a particular consumer for a single use cycle before being returned to a factory to be refurbished for another use. A soft protective layer, such as Styrofoam may exist between parts of the internal casing 129 and external casing 130. The physical reset mechanism 123 that is inaccessible through the external casing 130 may be located anywhere along the internal casing. The casings 129 and 130 may be highly customizable so the same internal OTUVC components can be used over and over again for multiple use cycles and potentially move between customers according to inventory needs.

The power supply 114 supplies power for all of the components within the digital OTUVC 100 but once the video content is captured and stored in the non-volatile memory 106, then the power supply 114 is no longer required to maintain the captured video data. The power supply 114 may contain several circuits with different power requirements. The power supply 114 may include any type of battery single-use or rechargeable or be an external AC or DC source of power.

The single-use per cycle restriction may be implemented through use of various design mechanisms. A few examples of design mechanism will be described to illustrate limiting the digital OTUVC 100 to a single use cycle. A limiting use component within the digital OTUVC 100 restricts a consumer's use of the one-time-use digital video camera for a single use cycle. For example, the digital OTUVC 100 may allow the consumer to use it freely until the digital OTUVC 100 runs out of power. The power supply 114 may be batteries having enough amps to be good for approximately 10 hours of use. Similarly, the power supply 114 may connect to a circuit to continuously drain the power supply 114 once the power button 118 is pressed to make the use of the video camera good for a maximum period of time. The digital OTUVC 100 may allow the consumer to film video until the non-volatile memory 106 is full. A clock circuit may monitor the amount of time recorded and triggers a kill signal to disable the digital OTUVC 100 from further use in the current use cycle. A clock circuit may monitor the amount of time elapsed since the video camera was initially activated for this current use cycle and triggers a kill signal to disable the one-time use digital video camera from further use in the current use cycle. The internal casing 129 and external casing 130 may be designed to not provide access to remove the actual memory containing the video data. Each digital OTUVC 100 may contain a unique identifier 122, such as a digital code embedded in the non-volatile memory 106 of the digital OTUVC 100. The digital OTUVC 100 imprints this unique identifier 122 on the captured video taken by the digital OTUVC 100. The unique identifier 122 then may be used to track use of this particular digital OTUVC 100. Criteria may be used to limit the use of the digital OTUVC 100, such as the amount of recorded video associated with this unique identifier 122 or the number of recycle rotations associated with this unique identifier 122, etc. Further, many other designed single use restrictions may be built into the digital OTUVC 100 to force a consumer to return the video camera to retrieve the captured video content within the video camera and have the video camera refurbished for another use cycle.

The User Interface 117 may include physical buttons such as shutter button, a On/Off power button 118 with automatic power-off on idle, a record button 120, a delete last shot button 121, a review the last segment button, and other similar buttons.

The non-volatile memory for firmware may store instructions for functional features that provide the consumer with a better usage experience. The firmware provides the ability to review the last recorded video segment from an initial press of the "record" button to the next pressing and prompt the user on the viewfinder display 124 if the recorded segment should be kept or erased. If erased, the video segment is removed from the non-volatile memory for data storage 106. The processor adjusts the remaining recording time indication on the status display 112 accordingly. The firmware provides the ability to record a short video segment after a pre-defined period of time with the use of a timer countdown. The user can utilize this self timer function to film video of them self. For example, the digital OTUVC 100 may automatically record fifteen seconds of video after activating the self-timer function and a ten second countdown delay. The digital OTUVC 100 may also capture high quality still images instead of a video segment. For example, the file size of a single high-resolution still photo shot may be equal to 15 seconds of video in the non-volatile memory 106. The stored file may also include the recording of the still image soundtrack of the audio during the picture taking. During processing of the video content by the external server, still photo shots may be generated from the video playback. The processor 108 may use instructions from the firmware 107 to format the captured pictures and video in a proprietary format keyed to be compatible with the software in the external server.

The digital OTUVC 100 may use standard connections for the communication port 110 in order to off load the data files stored in the volatile memory 104 or non-volatile memory 106. The connector to the communication port 110 may also be proprietary. The proprietary connector may be physically different in shape or wired differently than current industry standard connectors. The digital OTUVC 100 may connect to a special device, such as an external processing unit, that are distributed in specific retail locations where the videos can be off-loaded to an online site or embedded onto a non-volatile computer readable medium.

As discussed, little to no image processing occurs in the digital OTUVC 100. The central processor 108 may store raw image data from the photo optic sensor 102 into non-volatile memory 106. The central processor 108 may store raw digitized audio data from the microphone 128 into the non-volatile memory 106. The raw captured video data is then sent through the communication port 110 to the external processing unit to process the raw video data.

The digital OTUVC 100 also records meta data to be sent through the communication port 110 to the external processing unit to enhance the quality of the processing of the video data. The meta data may be the lighting conditions at the time of the video capture, white balance parameters of the sensor when the video is being shot, whether a light projector was used or not, selected to a self-time shot or not, exposure time, a start time and an end time of when a user was requesting a digital zoom of the video imaging, etc. All of the meta data allows the software in the external processing unit to understand the conditions and the features the user desired to insert when the video data was captured. With the addition of the meta data, the software in the external processing unit may generate a higher quality processing of the video data based on adjustments due to the information in the recorded meta data in order to supply a high quality consumable video product.

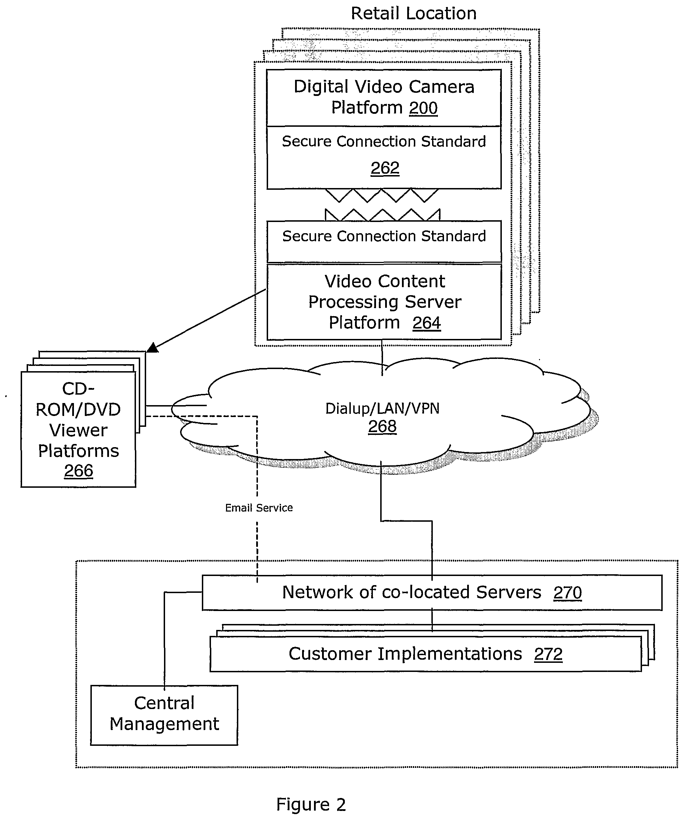

Figure 2 illustrates a block diagram of an embodiment of a digital one-time use video camera communicating over a secure connection to an external processing unit. The digital OTUVC 200 may connect though its communication port over a secure connection 262 to an external processor 264 such as a server. The external processing unit 264 may be located at a retail location. The external processing platform may have a viewer module 266 that also allows the consumer to view the final video product and to receive the final video content in a non-volatile digital storage medium, such as a DVD or CD ROM as well as other permanent mediums such as photographs. The external processor 264 at each retail location may cooperate over a network 268, such as a wide area network, a virtual private network, Internet, etc., with co-located servers 270 to process and enhance the original video data. A central database 272 at the co-located servers 270 may store a set of enhancements particular to each retail location. The set of enhancement may be added into original video data from the digital OTUVC 200 to generate the final video product supplied to the consumer.

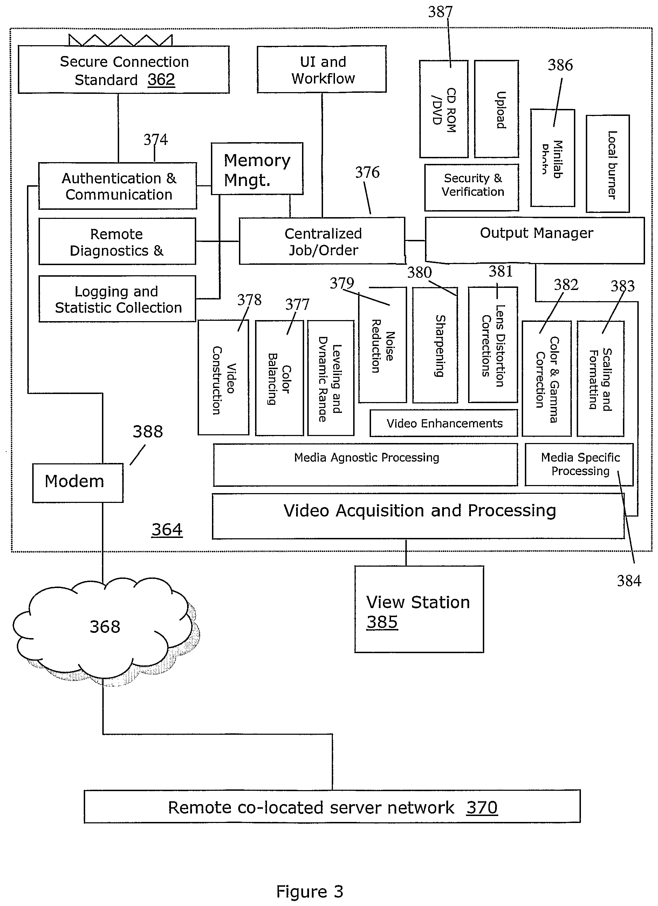

Figure 3 illustrates a block diagram of an embodiment of an external processing unit to process and enhance the video content captured by the digital one time use video camera. The external server 364 receives the captured video content and meta data from the digital OTUVC via the secure connection 362. The communication port 374 may have logic to authenticate the received original video content, identify the digital OTUVC sending the video data via its unique identifying number, and log the collected video data. The external server 364 may have one or more processors 376 configured to process the video content and meta data, as well as manage the devices, such as a CD ROM/DVD read/write drive, photograph making mini lab, etc. The external server 364 has logic and software to process and enhance the original captured video content from the non-volatile digital storage medium of the video camera. The original captured video content may be stored in a memory in the external processing unit 364 in order to process the video data and perform a series of procedures to ensure that the image and sound quality is as high as possible. The server may have logic to color balance 377, construct the video 378, provide noise reduction on the video and audio 379, sharpen of the video imaging 380, compensate for lens distortion 381, provide gamma and color correction 382, scale and format the video imaging 383, provide instruction for media specific processing 384, as well as other logic. Thus, the external processing unit 374 processing may include the ability to analyze the video footage and data from the camera to enhance its quality on a variety of scales such as brightness control, contrast control, dynamic range balancing, color balance, sharpness, motion smoothness, noise reduction, interframe interpolation such as up-sample frame-rate, etc. Also, the logic and software in the server provides audio enhancements by the ability to analyze the audio segments and data from the camera and improve its quality on a variety of scales such as volume, clarity, and noise reduction.

The external server 364 processes the video imaging and sound supplied in order to furnish the video content to a consumer in a video format useable by other consumer devices. The external server 364 may enhance the processing of the original video data by compensating for other factors indicated in the meta data associated with the captured video data such as lighting conditions, zoom feature activated, etc.

The external server 364 may enhance the original video data by adding in stock video footage intermixed with the original video data when the video product is supplied to the consumer. The external server 364 may also enhance the original video data by superimposing special effects such as a colorful border, sprinkles, stars, etc. onto the video footage supplied to the consumer. The logic and software in the external server 364 detects for expected opportunities in the original video content to add additional stock video footage or effects into the original video content. The external server 364 may enhance the original video data by detecting for natural points to add in sweep and fade effects. The external server 364 may enhance the original video data by adding other post production features superimposed or intermixed with the original video data. The external server 364 may also detect and assist in motion stabilization, such as the minimization of hand held jitter effects, on the captured video data in production of the final video product.

Referring to figure 1, the digital OTUVC 100 may capture user initiated processing annotations from the User Interface 117 for post production enhancing of the original video data. Annotations may be noted in the meta data. The external server may enhance the original video data by adding in a feature indicated by the meta data such as a digital zoom or wide panning effect. The user interface 117 may provide these buttons to a user but not actually contain that functionality within the camera. The annotations create start and end segments of time in the video content. If, for example, the user annotated a zoom feature to be performed, then the post production enhancing by the one or external servers changes the original captured video to reflect this annotation. The final consumable video product contains these enhancements to the original video data.

Referring to figure 3, the external processing unit 374 at the retail location may provide a variety of consumable products such as CD ROM and DVDs of the final video product, photographs, etc. The external processing unit 374 may be located as a retail-location device that enables the digital OTUVC to get connected to other digital devices such as a monitor, television, printers, email, etc. Once the processing stage is complete the image and sound data is ready to be used by other devices such as a view station 385, an upload to the internet via a modem 388, a printer, a photo finishing Mini-lab 386, a computer, a CD ROM/DVD read write drive 387, or any other similar device.

Using these products the consumers can review their captured memories, share the video content with their friends (physically or electronically), and store the video content for safekeeping. Consumers may also request further consumables at a later date and may do so through the Internet, a self-service kiosk, or at a central service location. The server may use the mini lab 386 to generate prints directly from the video or process still images for high quality printing. The external processing unit 374 may create standard Video CDs such as VCD1, VCD2 or SVCD, which can be viewed on both home/office computers as well as many advanced DVD players. The external processing unit 374 may generate an interactive DVD with titles of all of the footage and data. The DVD would allow the consumer to view the content asynchronously and skip directly to any segment/picture. The external processing unit 374 may upload video segments and/or still photos to a web hosting service for online sharing and publishing. This service/product includes not only the upload but also the special processing that is required for minimizing bandwidth and download time. The external processing unit 374 may create a viewing application that can be used on standard home/office computers. This application includes all of the video/audio and still images captured by the video camera and allows the consumer to view, manipulate, and share his/her footage.

The logic and software in the external processing unit 374 also provides the ability to scale video stream and still images to multiple sizes for multiple applications. The external processing unit 374 provides the ability to convert video stream and still images to a variety of other formats for all consumable products and services. The logic and software in the external processing unit 374 may be configured to automatically detect a scene change or a "good image" and extract a still image out of a video stream.

The external processing unit 374 may also receive updates from the co-located servers by 1) manually pressing an update button, 2) firmware periodically self initiating a remote update, 3) accepting an update initiated by a remote server, or a similar method. The external processing unit 374 sends a signal to the remote co-located servers 370 to receive maintenance updates, such as firmware and software updates. The processing unit 376 in the external processing unit 374 may reference a dial up number and an identifier from the non-volatile memory 375.

The external processing unit 374 receives a signal to check if any video files are stored in the non-volatile memory. If video files are stored in the non-volatile memory, then the external processing unit 374 uploads the video files to an off-site server 370. Further, the video may be temporary stored external to the external processing unit whilst software or firmware updates occur within the external processing unit. The software or firmware updates are downloaded and occur within the external processing unit 374.

Referring to figure 2, the processing of the video data by components external to the digital OTUVC 100 allows the amount of components, such as specialized processors, required within each digital OTUVC to be minimized. The multitude of consumer digital OTUVCs can all lack the expensive video processing and video enhancing components as long as the external server servicing the digital video camera has these components or similar components. Further, the servers at the retail locations may minimize the amount expensive video processing and video components in each server at a retail location. Each server at a retail location may communicate data over the network to these video and processing components located within the co-located servers.

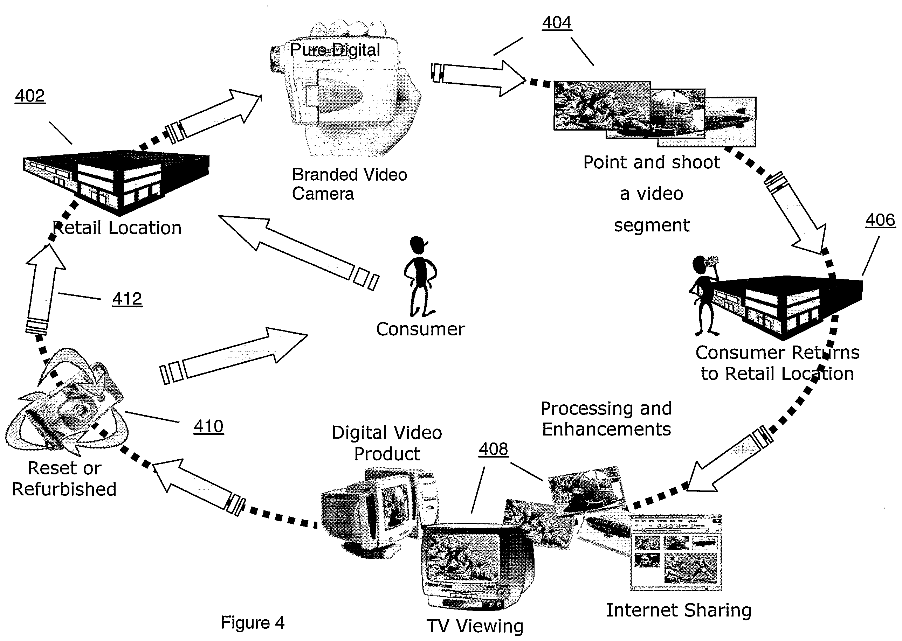

Figure 4 illustrates a flow diagram of an embodiment of a use cycle of a digital one-time use video camera.

In block 402, a consumer purchases a digital OTUVC from a retail location and takes the digital OTUVC for a single use cycle. The terms and conditions of that use cycle may be defined on the product packaging. Further, design mechanisms have been built into the camera to limit a one-time-use digital video camera for a single use cycle.

In block 404, the consumer uses the digital OTUVC for as long as the single-use restriction is not surpassed. Once the consumer is through with the first use of the digital OTUVC, then the consumer can buy refills or resets to make another use of the same digital OTUVC. While in use, the digital OTUVC can only be used according to its built-in logic (allow to delete only the last shot/segment for example) and usually cannot be connected to any home device. A one-time-use digital video camera may be constructed compact enough and with physical dimensions that allow the one-time-use digital video camera to be pocket sized.

In block 406, the consumer may take or mail the digital OTUVC to a store where he/she can off-load the captured video and potentially purchase a consumable video product for safekeeping. The video data captured by the digital OTUVC may be communicated to an external processing unit to process the video data. The quality of video data stored in a digital form by the one time use digital video camera may also be enhanced with the external processing unit.

The digital OTUVC may be designed to minimize the risk of improper use of the camera and violation of the use-cycle model. In order to support this business model, the large number of video cameras should not be abused by malicious users who would try and "hack" the system for multi-use at home without going through an authorized refurbishing facility/server. The digital OTUVC may use proprietary communication protocols and data formats to prevent any unauthorized person from using the data in the camera and the point may be designed to prevent a "hacker" from being able to communicate with its communication port all together. This implementation may also include a challenge-response mechanism where unless provided with a proper response to a challenge phrase all communication is halted by the camera. For example, the digital OTUVC may communicate its serial number and expect a pre-defined response that only an authorized host may know. Without the proper response the digital OTUVC would shut all communication down until disconnected and connected again.

After the processing of the original video content, the microprocessor in the external processing unit sends a signal to the digital OTUVC to delete the video content stored in the digital OTUVC. Although, the signal may not delete the video content from the camera ensuring that intellectual properties will not get lost by mistake. The signal may just mark the files for deletion, but not actually delete them. Thus, the consumer is forced to return the digital OTUVC to a vendor such as retailers, wholesalers, theme parks, consumers, and other avenues of distribution in order to for the consumer to obtain video content captured during the use cycle.

In block 408, a vendor has to process the captured video content in order for a consumer to archive their video content in a format playable by television, computer, etc. Once the consumer is through with the digital OTUVC, then the consumer brings the digital OTUVC 100 back to the store where the consumer gets prints and/or online uploads. The consumer receives any of the consumables the specific business program for the digital OTUVC includes for example, some consumables may be given for free while others may require additional purchase. The digital OTUVC may stay with the store, the consumer, or be sent to the factory for refurbishing.

In block 410, the digital OTUVC is then collected to a central refurbishment center where it is tested for proper functionality, parts are cleaned and/or replaced, and the entire product is repackaged for reintroduction into the market for a new use cycle. The refurbishing of the one-time-use digital video recorder makes the camera operational for another use cycle of the one-time-use digital video recorder as well as may change of parameters of the video camera, and firmware in the digital OTUVC.

Alternatively, a digital OTUVC may be refurbished at the retail location. The consumer has the ability to purchase a digital OTUVC reset token. The digital OTUVC reset token fits into a proprietary reset mechanism 123 designed into the external casing and internal casing to perform a physical single time reset. The digital OTUVC may be designed for a single use with the ability to purchase a digital OTUVC reset via a software command from the server. The reset command sends an authorization code stored in the server to the firmware in the digital OTUVC. During the refurbishing process, the digital OTUVC limiting-use component is reset and the digital OTUVC may have several quality assurance tests performed on the camera prior to being distributed for consumer use again.

In block 412, the one-time-use digital video camera may be designed to be sold during the first use cycle. The one-time-use digital video recorder is then sold for a second use cycle after refurbishing the one-time-use digital video recorder. The one time use digital camera may be designed on a cost basis to be refurbished and sold multiple times such as six or more times, before the camera manufacturer makes a profit from the sale of the camera. In addition, a loyalty program may exist where the same OTUVC is owned by the consumer and stays with the consumer for the life of the device. At the end of every use cycle, the consumer returns the digital OTUVC to the retail or central location where services are rendered, such as consumables generated by the server, and the device is reset on the spot for a new use cycle. The reset may be free or may include additional price. The camera manufacturer may sell the same one-time-use digital video camera multiple times to a vendor including distributors. The vendor in turn sells the same camera multiple times over its life cycle to consumers. The camera over its lifetime proceeds through use cycles of being sold, used, and refurbished. The one-time-use digital video camera is distributed to a retailer for consumers to purchase and take possession of the one-time-use digital video camera for a single use cycle.

Various, additional techniques and algorithms may be employed to improve image quality. Low-res image quality improvement techniques may be used. The low-res image may lack smoothing due to low resolution. The image needs to be enlarged (interpolated) about 400% and only then printed scaled down. The initial scaled image may be blurry as no new image information was provided but this technique improves the quality of the final (scaled down) image due to the fact that the smoothing elements (pixels surrounding the original pixels) are smaller than the size of the original pixels resulting in a smoother image.

Also multiple shots of the same image may be employed. The low-res image may enable multiple rapid consecutive shots to occur. The digital OTUVC may take a given number of very rapid (few millisecond delay between shots) consecutive shots, such as four, of the same picture. The consecutive shots are overlaid one on top of the other to create a new picture in the following manner: One picture serves as the base. Each other layer may be added on top of the base with only 100/(n -1) percent transparency (n=number of rapid shots taken). The newly formed picture may be much smoother and more "stable" in terms of its patterns (especially in low lighting conditions where graininess may be apparent).

Non-volatile memory usage improvement techniques may be used. The use of non-volatile memory is good for storing a scaled down version. For example, a 2.0 Mega pixel photo or video frame contains more information than may be required for a good quality 4" x 6" print. It is possible to scale each taken picture down to about 0.6 Mega pixel and saving about 70% of the non-volatile memory usage. Also the scaled down image may be of higher quality than an original photo or video frame taken with a 0.6 Mega pixel sensor as its pixels were created using twice the information.

Non-standard compression techniques may be used. Due to the "close cycle" nature of the recycling and refurbishing of the digital OTUVC it may be possible to use non-standard compression techniques with the digital OTUVC. Instead of creating JPG files, newer algorithms can be applied (e.g. wavelet compression) to save space (up to 75% saving compared to JPG) and potentially improve quality.

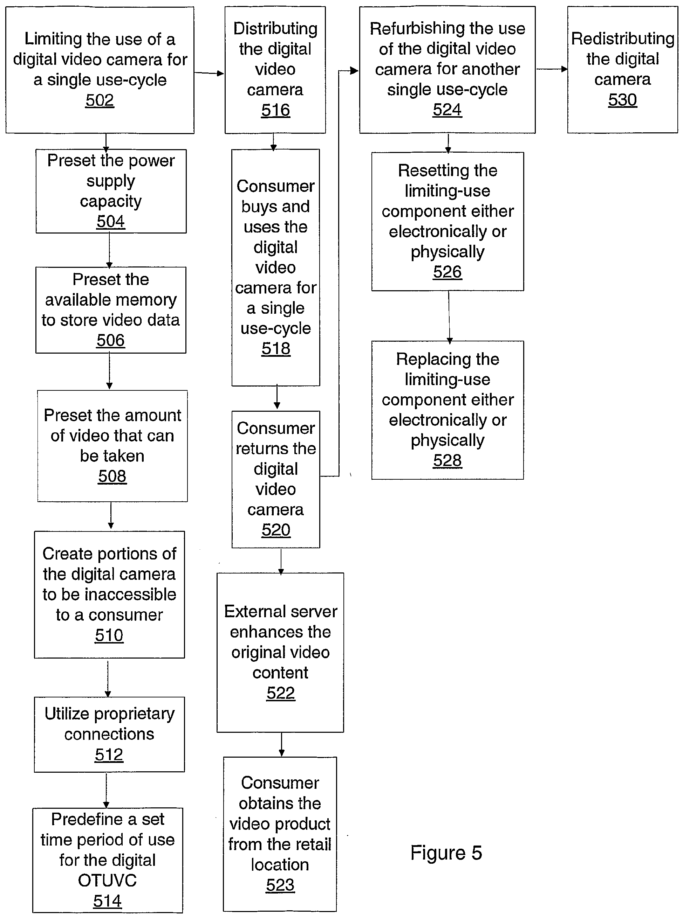

Figure 5 illustrates a flow diagram of an embodiment of a life cycle of a digital one-time use video camera.

In block 502, the use of a digital OTUVC is limited for a single use-cycle. The digital OTUVC has a limiting-use component to limit use of the digital OTUVC to a single use-cycle. The limiting-use component may vary and a few examples will be given again.

In block 504, the limiting-use component may be a power supply, such as batteries, designed to allow operation of the digital OTUVC for a predetermined period. After the predetermined period, the batteries would be depleted and need to be recharged or replaced during refurbishment of the digital OTUVC.

In block 506, the limiting-use component may be a memory, volatile or non-volatile, with a given capacity to store data corresponding to that capacity.

In block 508, the limiting-use component may be a preset of the amount of video that can be filmed. The available memory may be capable of storing more video content files, however, a software program limits to the preset capacity of the memory. A unique identifier from that particular digital OTUVC may also be imprinted on each video file stored in the digital OTUVC. The unique identifier may be employed to track how many pictures have been taken by a particular digital OTUVC and what was done with them. Thus, a customer may be able to purchase a set number of reset tokens to allow the consumer to take more video with the same digital OTUVC prior to having to return the actual digital OTUVC.

In block 510, the limiting-use component may be an inaccessible portion of the digital camera. In an embodiment, an external casing exists to prevent a consumer from having access to the power supply, memory, reset actuators, or similar components.

In block 512, the limiting-use component may be proprietary connections utilized to ensure that a consumer or non-authorized vendor could access the data stored within the digital OTUVC.

In block 514, the limiting-use component may be an internal clock to predefine a set time period of use for the digital OTUVC.

In block 516, after the digital OTUVC is manufactured and operational, then the digital camera is distributed to vendors such as retailers, wholesalers, theme parks, consumers, and other avenues of distribution.

In block 518, the consumer buys and uses the digital video camera for a single use-cycle. In an embodiment, the design of the limiting-use component establishes the duration of the single use-cycle. For example, X number of video segments, X period of time, X amount of memory space for storing video data files, etc.

In block 520, the consumer takes pictures and returns the digital video camera to the retailer, mail-in facility, or Internet facility.

In block 522, the external server enhances the original video data captured by the digital OTUVC. The external server may improve the quality of the sound and the images in the video, add in stock video, etc.

In block 523, the consumer obtains the final video product at the place where the consumer returned the digital OTUVC. The consumer may receive actual photographs, a CD ROM of their video, a DVD of their video, or an access the video files online.

In block 524, the use of the digital video camera is refurbished for another single use-cycle. The refurbishment may include a full quality assurance test and replacing the external shell if the embodiment includes a double shell implementation.

In block 526, the limiting-use component may be reset either electronically or physically in order to refurbish the digital OTUVC.

In block 528, the limiting-use component may be replaced either electronically or physically in order to refurbish the digital OTUVC.

In block 530, after refurbishment, the same digital video camera is sent out for distribution again. In an embodiment, the refurbishing facility may be on location and the distribution is internal to that location. For example, in a theme park or a very large retail wholesale facility the recycling may be on site.

While some specific embodiments of the invention have been shown the invention is not to be limited to these embodiments. For example, most functions performed by electronic hardware components may be duplicated by software emulation. Thus, a software program written to accomplish those same functions may emulate the functionality of the hardware components in input-output circuitry. A non-volatile digital storage medium may be read only memory (ROM), flash memory, EPROMs, EEPROMs, or any type of medium suitable for permanently storing electronic data. Multiple ASICs may be used instead of one central processor in the digital video camera. The invention is to be understood as not limited by the specific embodiments described herein, but only by scope of the appended claims.

## Claims

1. A one-time-use digital video camera (100), comprising:
an optical lens (126) and an optical sensor (102) for receiving and capturing images;
a microphone (128) for receiving and capturing sound;
means (108) for combining the captured images and the captured sounds into video data;
a memory (106) for storing the video data;
a digital viewfinder (124) to enable a user to see the images being received through the optical lens (126);
user control buttons (117) including:
a record button (120) to enable the user to control capture of the images received through the optical lens (126),
a review last-recorded-segment button to enable the user to start playback of a last recorded segment of the stored video data on the digital viewfinder, and
a delete-last-recorded-segment button (121) to enable the user to remove the last-recorded-segment of the stored video data from the memory (106);
a limiting use component for limiting use of the one-time-use digital video camera to no more than a single use cycle;
a processor configured to store the video data in the memory (106) in a non-consumable format only visible in an intelligible form from an external server and on the digital viewfinder (124) of the one-time-use digital video camera (100); and
wherein the one-time-use digital video camera can be enabled to be used again for another single use cycle by resetting or replacing the limiting use component.

2. The one-time-use digital video camera of claim 1, further comprising:
means (110) for communicating the stored video data to an external processing unit to process the stored video data.

3. The one-time-use digital video camera of either claim 1 or claim 2, further comprising:
means for recording meta data relating to the captured images and/or sound, the meta data being stored in the memory and providing information to enable the video data to be enhanced when it is downloaded from the memory and processed.

4. The one-time-use digital video camera of claim 3, wherein the meta data comprises any one or more of the following:
lighting conditions when the images were captured;
white balance parameters of the optical sensor when the images were captured;
information as to whether a light projector was used when the images were captured;
whether the one-time-use digital video camera was in a self-timing mode when the images were captured;
an exposure time for the captured images;
a start time and an end time of when a user was requesting a digital zoom for the captured images; and
user initiated processing annotations.

5. The one-time-use digital video camera of any preceding claim, wherein the limiting use component comprises one of the following:
a power supply (114), such as one or more batteries, for powering the one-time-use digital video camera for a predetermined period,
the memory (106) having a preset capacity,
means for limiting the amount of video data that can be stored;
means for limiting an amount of time during which the one-time-use digital video camera can be used;
means (130) for preventing access by a user to the power supply, the memory, or other components; and
proprietary connection means for accessing the video data stored in the memory.

6. The one-time-use digital video camera of claim 5, wherein the means for limiting the amount of video data that can be stored comprises a clock circuit to monitor an amount of time the video data has been recording and after a preset amount of time occurs to trigger a signal to disable the one-time-use digital video camera from further use in the current use cycle.

7. The one-time-use digital video camera of claim 5, wherein the power supply comprises one or more batteries having an amount of battery power designed to support only a single use cycle and replacement of the battery power is inaccessible to a user of the digital video camera.

8. The one-time-use digital video camera of claim 5, wherein the memory comprises a non-volatile digital storage medium designed to support only a single use cycle and the non-volatile digital storage medium is inaccessible to a user of the one-time-use digital video camera.

9. The one-time-use digital video camera of any preceding claim, which has physical dimensions that allows the one-time-use digital video camera to fit within a pocket of the user.

10. A system, comprising:
a one-time-use digital video camera (100) according to any preceding claim; and
a server (264) external to the one-time-use digital video camera (100) having a communication port to receive the stored video data, a processor configured to process the received video data, and means for recording the received video content as a video product onto a consumer medium in a video format useable by other consumer devices.

11. The system of claim 10, wherein the external server comprises means for enhancing the received video data.

12. The system of claim 11, wherein the received video data is enhanced based on meta data recorded at the time the images were captured.

13. The system of claim 11, wherein received video data is enhanced by adding in stock video intermixed with the received video data when the video product is recorded on the consumer medium.

## Patentansprüche

1. Eine digitale Einwegbenutzungsvideokamera (100), die Folgendes beinhaltet:
eine optische Linse (126) und einen optischen Sensor (102) zum Empfangen und Aufnehmen von Bildern;
ein Mikrofon (128) zum Empfangen und Aufnehmen von Ton;
ein Mittel (108) zum Kombinieren der aufgenommenen Bilder und der aufgenommenen Töne zu Videodaten;
einen Speicher (106) zum Speichern der Videodaten;
einen digitalen Sucher (124), um einem Benutzer zu ermöglichen, die Bilder, die durch die optische Linse (126) empfangen werden, zu sehen;
Benutzersteuerungstasten (117), die Folgendes umfassen:
eine Aufzeichnungstaste (120), um dem Benutzer zu ermöglichen, die Aufnahme der durch die optische Linse (126) empfangenen Bilder zu steuern,
eine Ansehen-von-zuletzt-aufgezeichnetem-Segment-Taste, um dem Benutzer zu ermöglichen, die Wiedergabe eines zuletzt aufgezeichneten Segments der gespeicherten Videodaten auf dem digitalen Sucher zu starten und
eine Löschen-von-zuletzt-aufgezeichnetem-Segment-Taste (121), um dem Benutzer zu ermöglichen, das zuletzt aufgezeichnete Segment der gespeicherten Videodaten aus dem Speicher (106) zu löschen;
eine Begrenzen-der-Benutzung-Komponente zum Begrenzen der Benutzung der digitalen Einwegbenutzungsvideokamera auf nicht mehr als einen einzelnen Benutzungszyklus;
einen Prozessor, der konfiguriert ist, um die Videodaten in dem Speicher (106) in einem Nichtverbrauchsformat zu speichern, das nur von einem externen Server und auf dem digitalen Sucher (124) der digitalen Einwegbenutzungsvideokamera (100) in einer verständlichen Form sichtbar ist; und
wobei es der digitalen Einwegbenutzungsvideokamera ermöglicht werden kann, für einen anderen einzelnen Benutzungszyklus durch Rücksetzen oder Ersetzen der Begrenzen-der-Benutzung-Komponente wieder benutzt zu werden.

2. Digitale Einwegbenutzungsvideokamera gemäß Anspruch 1, die ferner Folgendes beinhaltet:
ein Mittel (110) zum Kommunizieren der gespeicherten Videodaten an eine externe Verarbeitungseinheit, um die gespeicherten Videodaten zu verarbeiten.

3. Digitale Einwegbenutzungsvideokamera gemäß einem von Anspruch 1 oder Anspruch 2, die ferner Folgendes beinhaltet:
ein Mittel zum Aufzeichnen von Metadaten, die sich auf die aufgenommenen Bilder und/oder den aufgenommenen Ton beziehen, wobei die Metadaten in dem Speicher gespeichert werden und Informationen bereitstellen, um zu ermöglichen, dass die Videodaten verbessert werden, wenn sie von dem Speicher heruntergeladen und verarbeitet werden.

4. Digitale Einwegbenutzungsvideokamera gemäß Anspruch 3, wobei die Metadaten eines oder mehrere der Folgenden beinhalten:
Beleuchtungsbedingungen als die Bilder aufgenommen wurden;
Weißabgleichparameter des optischen Sensors als die Bilder aufgenommen wurden;
Informationen darüber, ob ein Lichtprojektor benutzt wurde, als die Bilder aufgenommen wurden;
ob sich die digitale Einwegbenutzungsvideokamera in einem Selbstauslösungsmodus befand, als die Bilder aufgenommen wurden;
eine Belichtungszeit für die aufgenommenen Bilder;
einen Startzeitpunkt und einen Endzeitpunkt, wann ein Benutzer einen digitalen Zoom für die aufgenommenen Bilder angefordert hat; und
benutzerinitiierte Verarbeitungsannotationen.

5. Digitale Einwegbenutzungsvideokamera gemäß einem vorhergehenden Anspruch, wobei die Begrenzen-der-Benutzung-Komponente eines der Folgenden beinhaltet:
eine Stromversorgung (114), wie etwa eine oder mehrere Batterien, um die digitale Einwegbenutzungsvideokamera für eine vorgegebene Zeitdauer mit Strom zu versorgen,
den Speicher (106), der eine voreingestellte Kapazität aufweist,
ein Mittel zum Begrenzen der Videodatenmenge, die gespeichert werden kann;
ein Mittel zum Begrenzen der Zeitdauer, während der die digitale Einwegbenutzungsvideokamera benutzt werden kann;
ein Mittel (130) zum Verhindern von Zugriff auf die Stromversorgung, den Speicher oder andere Komponenten durch einen Benutzer; und
ein proprietäres Verbindungsmittel zum Zugreifen auf die Videodaten, die in dem Speicher gespeichert sind.

6. Digitale Einwegbenutzungsvideokamera gemäß Anspruch 5, wobei das Mittel zum Begrenzen der Videodatenmenge, die gespeichert werden kann, eine Uhrenschaltung beinhaltet, um eine Zeitdauer zu überwachen, über die die Videodaten aufgezeichnet wurden, und um nach Auftreten einer voreingestellten Zeitdauer ein Signal auszulösen, um die digitale Einwegbenutzungsvideokamera für die weitere Benutzung in dem aktuellen Benutzungszyklus zu deaktivieren.

7. Digitale Einwegbenutzungsvideokamera gemäß Anspruch 5, wobei die Stromversorgung eine oder mehrere Batterien beinhaltet, die eine Batteriestrommenge aufweisen, die dafür ausgelegt ist, nur einen einzelnen Benutzungszyklus zu unterstützen, und die Ersetzung des Batteriestroms für einen Benutzer der digitalen Videokamera nicht zugreifbar ist.

8. Digitale Einwegbenutzungsvideokamera gemäß Anspruch 5, wobei der Speicher ein nicht flüchtiges, digitales Speicherungsmedium beinhaltet, das dafür ausgelegt ist, nur einen einzelnen Benutzungszyklus zu unterstützen, und das nicht flüchtige, digitale Speicherungsmedium für einen Benutzer der digitalen Einwegbenutzungsvideokamera nicht zugreifbar ist.

9. Digitale Einwegbenutzungsvideokamera gemäß dem vorhergehenden Anspruch, die physikalische Abmessungen aufweist, die der digitalen Einwegbenutzungsvideokamera erlauben, in eine Tasche des Benutzers zu passen.

10. Ein System, das Folgendes beinhaltet:
eine digitale Einwegbenutzungsvideokamera (100) gemäß einem vorhergehenden Anspruch; und
einen Server (264) extern zu der digitalen Einwegbenutzungsvideokamera (100), der Folgendes aufweist: einen Kommunikationsanschluss, um die gespeicherten Videodaten zu empfangen, einen Prozessor, der konfiguriert ist, um die empfangenen Videodaten zu verarbeiten, und ein Mittel zum Aufzeichnen des empfangenen Videoinhalts als Videoprodukt auf einem Verbrauchermedium in einem Videoformat, das von anderen Verbrauchervorrichtungen benutzbar ist.

11. System gemäß Anspruch 10, wobei der externe Server ein Mittel zum Verbessern der empfangenen Videodaten beinhaltet.

12. System gemäß Anspruch 11, wobei die empfangenen Videodaten basierend auf Metadaten verbessert werden, die zu dem Zeitpunkt aufgezeichnet wurden, zu dem die Bilder aufgenommen wurden.

13. System gemäß Anspruch 11, wobei die empfangenen Videodaten durch Einfügen von Stockvideo, vermischt mit den empfangenen Videodaten, verbessert werden, wenn das Videoprodukt auf dem Verbrauchermedium aufgezeichnet wird.

## Revendications

1. Caméra vidéo numérique à usage unique (100), comprenant :
un objectif optique (126) et un capteur optique (102) destinés à recevoir et à capturer des images ;
un microphone (128) destiné à recevoir et capturer le son ;
un moyen (108) destiné à combiner les images capturées et les sons capturés en données vidéo ;
une mémoire (106) destinée à mémoriser les données vidéo ;
un viseur numérique (124) permettant à un utilisateur de voir les images reçues par le biais de l'objectif optique (126) ;
des boutons de commande d'utilisateur (117) comportant :
un bouton d'enregistrement (120) permettant à l'utilisateur de commander la capture des images reçues par le biais de l'objectif optique (126),
un bouton de révision de dernier segment enregistré permettant à l'utilisateur de commencer la lecture d'un dernier segment enregistré des données vidéo mémorisées sur le viseur numérique, et
un bouton d'effacement de dernier segment enregistré (121) permettant à l'utilisateur d'effacer de la mémoire (106) le dernier segment enregistré des données vidéo mémorisées (106) ;
un composant de limitation d'usage destiné à limiter l'usage de la caméra vidéo numérique à usage unique à pas plus d'un seul cycle d'utilisation ;
un processeur configuré pour mémoriser les données vidéo dans la mémoire (106) dans un format non consommable uniquement visible dans une forme intelligible par un serveur externe et sur le viseur numérique (124) de la caméra vidéo numérique à usage unique (100) ; et
la caméra vidéo numérique à usage unique pouvant être activée pour être utilisée à nouveau pour un autre cycle d'usage unique en réinitialisant ou remplaçant le composant de limitation d'usage.

2. Caméra vidéo numérique à usage unique selon la revendication 1, comprenant en outre :
un moyen (110) destiné à communiquer les données vidéo mémorisées à une unité de traitement externe pour traiter les données vidéo mémorisées.

3. Caméra vidéo numérique à usage unique selon la revendication 1 ou la revendication 2, comprenant en outre :
un moyen destiné à enregistrer des métadonnées se rapportant aux images et/ou son capturés, les métadonnées étant mémorisées dans la mémoire et fournissant des informations pour permettre le rehaussement des données vidéo quand elles sont déchargées de la mémoire et traitées.

4. Caméra vidéo numérique à usage unique selon la revendication 3, dans laquelle les métadonnées comprennent une ou plusieurs des données suivantes :
conditions d'éclairage à l'instant de capture des images ;
paramètres d'équilibre des blancs du capteur optique à l'instant de capture des images ;
information qu'un projecteur de lumière a été utilisé ou non à l'instant de capture des images ;
information que la caméra vidéo numérique à usage unique était ou non dans un mode de minuterie automatique à l'instant de capture des images ;
durée d'exposition des images capturées ;
temps de début et temps de fin d'une demande de zoom numérique des images capturées par un utilisateur ; et
annotations de traitement lancées par l'utilisateur.

5. Caméra vidéo numérique à usage unique selon n'importe quelle revendication précédente, dans laquelle le composant de limitation d'usage comprend un des éléments suivants :
une alimentation électrique (114), telle qu'une ou plusieurs batteries, pour alimenter la caméra vidéo numérique à usage unique pendant une période prédéterminée,
la mémoire (106) d'une capacité prédéfinie,
un moyen de limitation de la quantité de données vidéo pouvant être mémorisée ;
un moyen de limitation d'une durée de temps pendant laquelle la caméra vidéo numérique à usage unique peut être utilisée ;
un moyen (130) de blocage de l'accès par un utilisateur à l'alimentation électrique, la mémoire ou d'autres composants ; et
un moyen de connexion privée pour accéder aux données vidéo mémorisées dans la mémoire.

6. Caméra vidéo numérique à usage unique selon la revendication 5, dans laquelle le moyen de limitation de la quantité de données vidéo pouvant être mémorisée comprend un circuit d'horloge pour surveiller une durée d'enregistrement des données vidéo et après une durée prédéfinie déclencher un signal pour désactiver la caméra vidéo numérique à usage unique et ne plus l'utiliser dans le cycle d'usage en cours.

7. Caméra vidéo numérique à usage unique selon la revendication 5, dans laquelle l'alimentation électrique comprend une ou plusieurs batteries d'une quantité de puissance batterie conçue pour prendre en charge un cycle d'usage unique, sans qu'un utilisateur de la caméra vidéo numérique puisse remplacer l'alimentation batterie.

8. Caméra vidéo numérique à usage unique selon la revendication 5, dans laquelle la mémoire comprend un support de mémorisation numérique rémanent conçu pour prendre en charge un cycle d'usage unique, sans qu'un utilisateur de la caméra vidéo numérique à usage unique puisse accéder au support de mémorisation numérique rémanent.

9. Caméra vidéo numérique à usage unique selon n'importe quelle revendication précédente, laquelle présente des dimensions physiques qui permettent à un utilisateur de placer la caméra vidéo numérique à usage unique dans une poche.

10. Système, comprenant :
une caméra vidéo numérique à usage unique (100) selon l'une quelconque des revendications précédentes ; et
un serveur (264) externe à la caméra vidéo numérique à usage unique (100) présentant un port de communication pour recevoir les données vidéo mémorisées, un processeur configuré pour traiter les données vidéo reçues, et un moyen d'enregistrement du contenu vidéo reçu en tant que produit vidéo sur un support grand public dans un format vidéo utilisable par d'autres dispositifs grand public.

11. Système selon la revendication 10, dans lequel le serveur externe comprend un moyen de rehaussement des données vidéo reçues.

12. Système selon la revendication 11, dans laquelle les données vidéo reçues sont rehaussées en fonction de métadonnées enregistrées à l'instant de capture des images.

13. Système selon la revendication 11, dans laquelle les données vidéo reçues sont rehaussées en ajoutant un stock vidéo mélangé aux données vidéo reçues à l'enregistrement du produit vidéo sur le support grand public.
